# EUROPEAN PATENT APPLICATION

(11) **EP 3 061 940 A1**
(43) Date of publication of application: **31.08.2016**
(21) Application number: 16157549.3
(22) Date of filing: 26.02.2016
(51) Int. Cl.: F02B 23/00, F02F 1/18, F02B 25/08, F02B 75/28, F02B 23/06, F02M 47/02, F02M 61/14

(54) **FUEL INJECTOR WITH OFFSET NOZZLE ANGLE**

(30) Priority: 27.02.2015 US 201562121815 P; 23.02.2016 US 201615050883
(71) Applicant: AVL Powertrain Engineering, Inc., Plymouth MI 48170 (US)
(72) Inventor: Johnson, Gustav R., Canton, Michigan 48187 (US); Hunter, Gary, Dexter, Michigan 48130 (US)
(74) Representative: Witte, Weller & Partner Patentanwälte mbB

(57) **Abstract**

A fuel injector includes a nozzle, a needle, and a pressure control section. The nozzle has first and second ends and extends along a first longitudinal axis from the first end to the second end. The nozzle includes a nozzle body defining a first longitudinal passage that extends along the first longitudinal axis and through the second end of the nozzle. The needle is disposed within the first longitudinal passage and is movable between a first position in which the needle prevents fuel from flowing through the second end of the nozzle and a second position in which the needle allows fuel to flow through the second end. The pressure control section extends along a second longitudinal axis that is angularly offset relative to the first longitudinal axis of the nozzle. The pressure control section includes an electromechanical actuator that actuates the needle between the first and second positions.

## Description

### FIELD

The present disclosure relates to fuel injectors, and more particularly, to fuel injectors with an offset nozzle angle.

### BACKGROUND

This section provides background information related to the present disclosure which is not necessarily prior art.

Opposed piston engines include two pistons housed within a single cylinder that move in an opposed, reciprocal manner within the cylinder. In this regard, during one stage of operation, the two pistons are moving away from one another within the cylinder. During another stage of operation, the two pistons are moving towards one another within the cylinder.

Nozzles or injection ports can be used to inject a fuel into the cylinder. As the pistons move towards one another within the cylinder, they compress and, thus, cause the ignition of a fuel injected into the cylinder by the nozzle. In some configurations, each cylinder can include more than one fuel nozzle. In addition, each opposed piston engine can include more than one cylinder. In such configurations, the arrangement of the fuel nozzles and the cylinders can add to the overall size, weight, and complexity of the opposed piston engine.

While known opposed-piston engines have generally proven to be acceptable for their intended purposes, a continued need in the relevant art remains for an opposed piston engine having improved combustion performance, including efficient air utilization and fuel mixing, and a reduced size, weight, and complexity.

### SUMMARY

This section provides a general summary of the disclosure, and is not a comprehensive disclosure of its full scope or all of its features.

A fuel injector according to the present disclosure includes a nozzle, a needle, and a pressure control section. The nozzle has first and second ends and extends along a first longitudinal axis from the first end to the second end. The nozzle includes a nozzle body defining a first longitudinal passage that extends along the first longitudinal axis and through the second end of the nozzle. The needle is disposed within the first longitudinal passage and is movable between a first position in which the needle prevents fuel from flowing through the second end of the nozzle and a second position in which the needle allows fuel to flow through the second end. The pressure control section extends along a second longitudinal axis that is angularly offset relative to the first longitudinal axis. The pressure control section includes an electromechanical actuator that actuates the needle between the first and second positions.

An opposed-piston engine according to the present disclosure includes a cylinder, a pair of pistons, and a first fuel injector. The cylinder defines a cylinder bore and at least one injection port extending through a perimeter surface of the cylinder to the cylinder bore. The pistons are disposed within the cylinder bore and at least partially define a combustion chamber therebetween. The first fuel injector is operable to inject fuel into the cylinder bore through the at least one injection port. The first fuel injector includes a first nozzle, a first needle, and a first pressure control section. The first nozzle has a first end and a second end and extends along a first longitudinal axis from the first end to the second end. The first nozzle defines a first longitudinal passage that extends along the first longitudinal axis and through the second end. The first needle is disposed within the first longitudinal passage and is movable between a first position in which the first needle prevents fuel flow through the second end of the first nozzle and a second position in which the first needle allows fuel flow through the second end of the first nozzle. The pressure control section extends along a second longitudinal axis that is angularly offset relative to the first longitudinal axis. The pressure control section includes an electromechanical actuator that actuates the needle between the first and second positions.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 is an exploded view of an opposed-piston engine including a cylinder, a pair of pistons disposed within the cylinder, and fuel injectors having offset nozzle angles in accordance with the principles of the present disclosure;
FIG. 2 is a section view of the opposed-piston engine of FIG. 1 taken along a longitudinal axis of the cylinder;
FIG. 3 is a section view of one of the fuel injectors of FIG. 1 in a closed position;
FIG. 4 is a section view of the fuel injector of FIG. 3 in an open position;
FIG. 5 is a section view of an alternative embodiment of the engine of FIG. 1 taken along a plane that extends perpendicular to the longitudinal axis of the cylinder, where the fuel injectors are in their respective closed positions; and
FIG. 6 is a section view of the alternative embodiment of the engine of FIG. 1 taken along the plane that extends perpendicular to the longitudinal axis of the cylinder, where the fuel injectors are in their respective open positions.
Corresponding reference numerals indicate corresponding parts throughout the several views of the drawings.

### DETAILED DESCRIPTION

Example embodiments will now be described more fully with reference to the accompanying drawings.

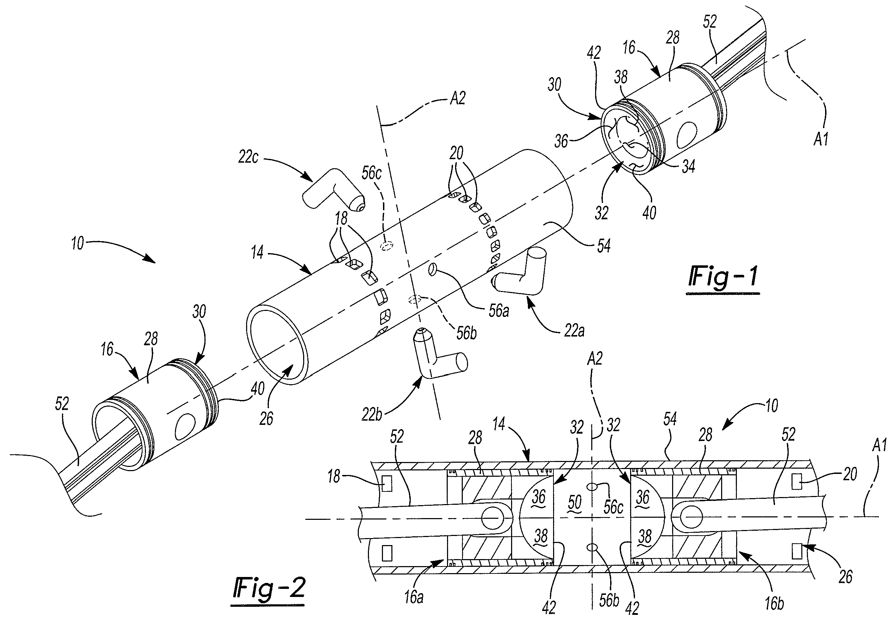

With reference to FIGS. 1 and 2, an engine 10 is provided. In one configuration, the engine 10 may be an opposed-piston, two-stroke diesel engine for use in a vehicle or other machine. However, the engine 10 may have other configurations such as a spark-ignition engine and/or a four-stroke engine.

The engine 10 may include a cylinder or cylinder liner 14, a pair of pistons 16, a plurality of outlet ports 18, a plurality of inlet ports 20, and at least two fuel injectors 22. Although only one cylinder 14 is shown, the engine 10 may include any number of cylinders 14, each including the pair of pistons 16. The cylinders 14 may be arranged so that their longitudinal axes are disposed within a common plane, or the cylinders 14 may be arranged so that their longitudinal axes are offset from one another as disclosed in U.S. Provisional Application Nos. 62/126,009 and 62/121,879, which were both filed on February 27, 2015 and are both incorporated by reference herein.

The cylinder 14 may be formed from a material such as iron, steel, or a suitable metallic alloy, and may extend along a longitudinal axis A1. In this regard, the longitudinal axis A1 may be a central longitudinal axis A1 about which the cylinder 14 is symmetrically disposed. The cylinder 14 may also include a transverse axis A2 extending in a direction substantially perpendicular to the longitudinal axis A1. A bore 26 may extend through, or otherwise be defined by, the cylinder 14 along the longitudinal axis A1. The outlet ports 18 and the inlet ports 20 may be configured to fluidly communicate with the bore 26. In this regard, the inlet ports 20 can be configured to deliver air (e.g., ambient air, air from a turbocharger or other portion of an exhaust gas regeneration system (not shown), etc.) to the bore 26 for combustion, while the outlet ports 18 can be configured to remove exhaust gases from the bore 26 after combustion.

The pistons 16 may be slidably disposed in the bore 26 of the cylinder 14 for opposed, reciprocating motion along the longitudinal axis A1. Each piston 16 may include a skirt 28 and a crown 30. In some configurations, the skirt 28 can be integrally or monolithically formed with the crown 30. The crown 30 may include a recess 32 that is at least partially formed or defined by a bottom surface 34, first side surface 36, a second side surface 38, and a third side surface 40. In some configurations, the bottom surface 34 may be concave and symmetrically disposed about the longitudinal axis A1. The first, second, and third side surfaces 36, 38, 40 may be substantially identical to each another. In this regard, the first, second, and third side surfaces 36, 38, 40 may extend from an end or rim 42 of the piston 16 to the bottom surface 34. Accordingly, the first, second, and third side surfaces 36, 38, 40 may be symmetrically disposed about the longitudinal axis A1. In some configurations, the first, second, and third side surfaces 36, 38, 40 may include a concave shape or profile. It will be appreciated, however, that the first, second, and third side surfaces 36, 38, 40 may include various shapes or profiles within the scope of the present disclosure.

As illustrated in FIG. 2, in an assembled configuration, the recess 32 of a first piston 16a and the recess 32 of a second piston 16b may define a chamber 50 therebetween. The first and second pistons 16a, 16b may be disposed within the bore 26 such that the first, second, and third side surfaces 36, 38, 40 of the first piston 16a are aligned with the first, second, and third side surfaces 36, 38, 40, respectively, of the second piston 16b. Accordingly, in some configurations the chamber 50 may be symmetrically disposed relative to the longitudinal axis A1. Specifically, the chamber 50 may be symmetric relative to a cross section of the engine 10 intersecting the longitudinal axis A2 (FIG. 2), and symmetric relative to a cross section of the engine 10 intersecting the transverse axis A1 (FIG. 2). In other configurations, the first, second, and third side surfaces 36, 38, 40 of the first piston 16a may be offset from, or otherwise have a different shape or profile than the first, second, and third side surfaces 36, 38, 40 of the second piston 16b, such that the chamber 50 may be asymmetric relative to the cross section of the engine 10 intersecting the longitudinal axis A1 (FIG. 2), and/or asymmetric relative to the cross section of the engine 10 intersecting the transverse axis A2 (FIG. 2).

It will be appreciated that as the first and second pistons 16a, 16b slide or otherwise move within the bore 26 between a bottom dead center position (not shown) and a top dead center position (FIG. 2), the size of the chamber 50 will vary between a fully compressed configuration and a fully expanded configuration. In this regard, each piston 16 may be supported by, or otherwise coupled to, a connecting rod 52. The connecting rod 52 can be supported by, or otherwise coupled to, a crankshaft (not shown). As the pistons 16 slide or otherwise translate within the bore 26 of the cylinder 14, the translational movement of the pistons 16 can be converted to the rotational movement of the crankshaft through the connecting rod 52.

The outlet ports 18 and the inlet ports 20 may be defined by the cylinder 14 and extend radially through a perimeter surface 54 of the cylinder 14. The cylinder 14 may also define injection ports 56 that extend radially through the perimeter surface 54 of the cylinder 14. The fuel injectors 22 are operable to inject fuel into the bore 26 through the injection ports 56. In the example shown, the injection ports 56 includes first, second, and third injection ports 56a, 56b, and 56c aligned with one another along the longitudinal axis A1 and symmetrically disposed about the longitudinal axis A1. In addition, the fuel injectors 22 include first, second, and third fuel injectors 22a, 22b, 22c operable to inject fuel through the first, second, and third injection ports 56a, 56b, and 56c, respectively. However, the engine 10 may include additional or fewer fuel injectors 22 and additional or fewer injection ports 56. For example, the cylinder 14 may define only two injection ports 56 that are disposed opposite from one another along the transverse axis A2, and the engine 10 may include only two fuel injectors 22 that are each operable to inject fuel into one of the injection ports 56. In addition, the injection ports 56 may not be aligned with one another along the longitudinal axis A1 or symmetrically disposed about the longitudinal axis A1.

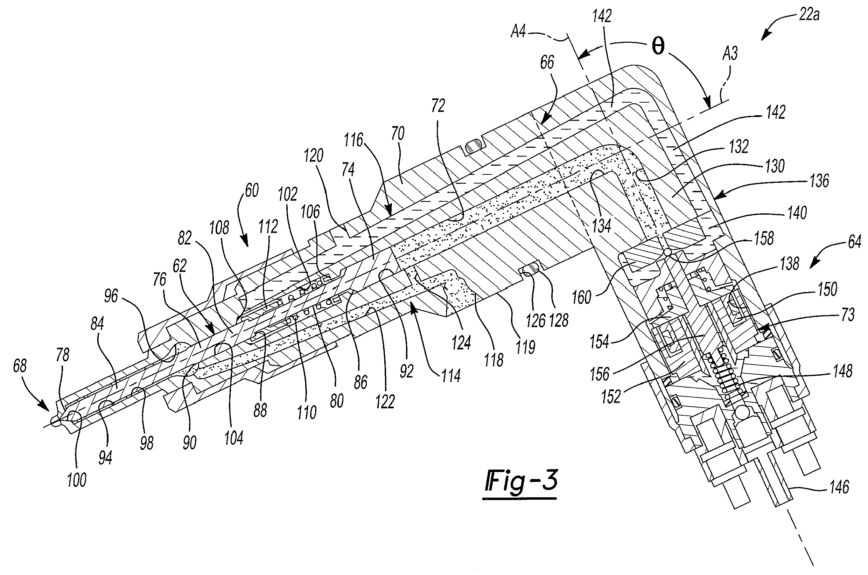

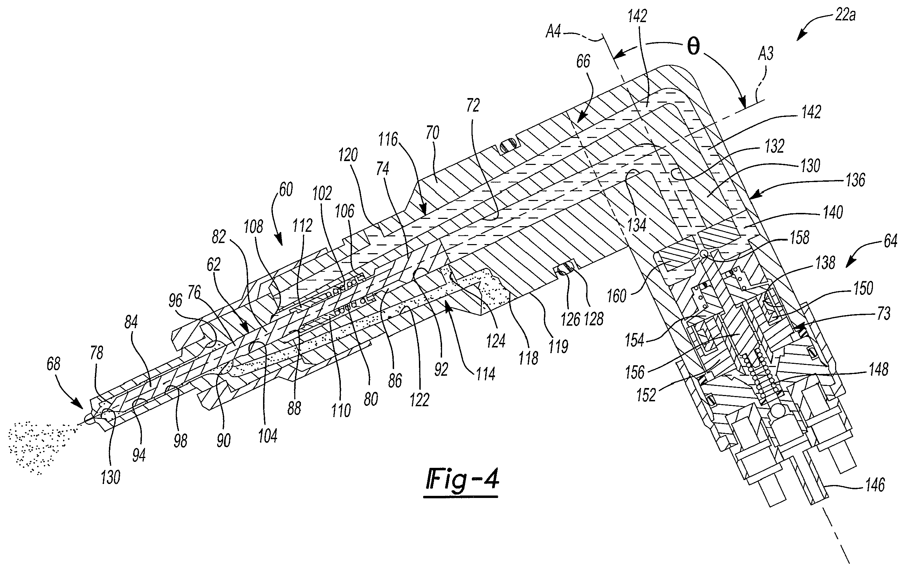

With additional reference to FIGS. 3 and 4, an example of the fuel injector 22a is shown with the fuel injector 22a in its closed position. Although only the fuel injector 22a is shown, the fuel injectors 22b and 22c may be similar or identical to the fuel injector 22a. Accordingly, except as otherwise provided, references herein to the fuel injector 22a will be understood to apply equally to the first, second, and third fuel injectors 22a, 22b, and 22c, and like reference numerals may be used to describe similar features of the first, second, and third fuel injectors 22a, 22b, and 22c.

The fuel injector 22 includes a nozzle 60, a needle 62, and a pressure control section 64. The nozzle 60 and the pressure control section 64 may be integrally or monolithically formed, as shown, or formed separately and attached together. The nozzle 60 has a first end 66 and a second end 68 and extends along a longitudinal axis A3 from the first end 66 to the second end 68. The nozzle 60 includes a nozzle body 70 defining a longitudinal passage 72 that extends along the longitudinal axis A3 and through the second end 68 of the nozzle 60. The nozzle body 70 may be generally cylindrical.

The needle 62 is disposed within the longitudinal passage 72 of the nozzle 60 and is movable between a first position (FIG. 3) and a second position (FIG. 4). In the first position, the needle 62 prevents fuel from flowing through the second end 68 of the nozzle 60. In the second position, the needle 62 allows fuel to flow through the second end 68 of the nozzle 60. Thus, the fuel injector 22 is closed when the needle 62 is in the first position, and the fuel injector 22 is open when the needle 62 is in the second position.

The pressure control section 64 extends along a second longitudinal axis A4 and includes an electromechanical actuator, such as a solenoid valve 73, which actuates the needle 62 between the first and second positions. The first and second longitudinal axes A3 and A4 are disposed within a common plane that extends through the center of the fuel injector 22 and is perpendicular to the longitudinal axis A1 of the bore 26. In addition, the second longitudinal axis A4 of the pressure control section 64 is angularly offset relative to the first longitudinal axis A3 of the nozzle 60. For example, the second longitudinal axis A4 may be oriented at an angle θ between 45 degrees and 135 degrees relative to the first longitudinal axis A3. In the example shown, the second longitudinal axis A4 is oriented at an angle θ of approximately 90 degrees relative to the first longitudinal axis A3. The term approximately is used in the preceding sentence to allow for manufacturing tolerances and variation.

The angular offset of the second longitudinal axis A4 of the pressure control section 64 relative to the first longitudinal axis A3 of the nozzle 60 reduces the packaging space required by the fuel injectors 22a, 22b, 22c. Thus, if the engine 10 includes multiple cylinders 14, the cylinders 14 may be arranged closer together. In turn, the packaging space required by the entire engine 10 is reduced.

As noted above, the first, second, and third fuel injectors 22a, 22b, 22c (FIG. 1) are operable to inject fuel through the first, second, and third injection ports 56a, 56b, and 56c, respectively. In this regard, the fuel injectors 22a, 22b, 22c may be mounted within an engine block (not shown) such that the second ends 68a, 68b, 68c, of the nozzles 60a, 60b, 60c extend through the injection ports 56a, 56b, 56c. In addition, the longitudinal axes A4a, A4b, A4c of the nozzles 60a, 60b, 60c may be aligned with the central axes of the injection ports 56a, 56b, 56c. Thus, the longitudinal axes A4a, A4b, A4c of the nozzles 60a, 60b, 60c may be aligned with one another along the longitudinal axis A1 and symmetrically disposed about the longitudinal axis A1.

As shown in FIGS. 3 and 4, the needle 62 includes a head 74, a shank 76, and a tip 78. The tip 78 is disposed adjacent to the second end 68 of the nozzle 60. The head 74 is disposed at an end of the needle 62 opposite from the tip 78. The head 74 and the shank 76 may be cylindrical, and the tip may be conical. The shank 76 may include a first portion 80, a second portion 82, and a third portion 84.

The first portion 80 of the shank 76 may have a reduce diameter relative to the head 74 such that a shoulder 86 is formed between the head 74 and the first portion 80. The shoulder 86 may taper radially inward from the head 74 to the first portion 80 of the shank 76, as shown. Similarly, the first portion 80 of the shank 76 may have a reduce diameter relative to the second portion 82 of the shank 76 such that a shoulder 88 is formed between the first and second portions 80 and 82. Likewise, the third portion 84 of the shank 76 may have a reduced diameter relative to the second portion 82 of the shank 76 such that a shoulder 90 is formed between the second and third portions 82 and 84.

The longitudinal passage 72 includes a first portion 92 and a second portion 94. The head 74 of the needle 62 is disposed within the first portion 92 of the longitudinal passage 72, and at least one of the tip 78 and the shank 76 of the needle 62 are disposed within the second portion 94. In the example shown, the tip 78 and the third portion 84 of the shank 76 are disposed in the second portion 94 of the longitudinal passage 72.

The first portion 92 of the longitudinal passage 72 is configured to receive pressurized fuel that acts on the head 74 to urge the needle 62 toward the second end 68 of the nozzle 60. The outer diameter of the head 74 may be approximately equal to or only slightly less than the inner diameter of the first portion 92 such that the head 74 prevents fluid communication between the first and second portions 92 and 94 of the longitudinal passage 72.

The second portion 94 of the longitudinal passage 72 includes a bulbous portion 96, a cylindrical portion 98, and a conical portion 100. The bulbous and cylindrical portions 96 and 98 are configured to contain pressurized fuel that acts on the shoulder 90 of the needle 62 to urge the needle 62 toward the first end 66 of the nozzle 60. In this regard, the inner diameters of the bulbous and cylindrical portions 96 and 98 may be greater than the outer diameter of the third portion 84 of the shank 76, as shown, to provide an annular gap for containing pressurized fluid. The conical portion 100 may have a conical taper that matches the conical taper of the tip 78 such that the tip 78 prevents pressurized fuel from flowing through the second end 68 of the nozzle 60 when the tip 78 is seated against the conical portion 100, as shown in FIG. 3.

The longitudinal passage 72 may also include a third portion 102 and a fourth portion 104 disposed between the first and second portions 92 and 94 of the longitudinal passage 72. The inner diameter of the third portion 102 may be greater than the inner diameter of the first portion 92 such that a shoulder 106 is formed between the first and third portions 92 and 102. Similarly, the inner diameter of the third portion 102 may be greater than the inner diameter of the fourth portion 104 such that a shoulder 108 is formed between the third and fourth portions 102 and 104.

In addition, the inner diameter of the third portion 102 of the longitudinal passage 72 may be greater than the outer diameter of the first portion 80 of the shank 76 to provide an annular gap therebetween. A spring 110 and a spring stop 112 may be disposed in the annular gap. The spring stop 112 may be fixed to the needle 62 using, for example, a press fit. The spring 110 may be captured between the shoulder 106 and the spring stop 112 such that the spring 110 biases the needle 62 toward the second end 68 of the nozzle 60.

The inner diameter of the fourth portion 104 may be approximately equal to or slightly less than the outer diameter of the second portion 82 of the shank 76. Thus, like the head 74, the second portion 82 of the shank 76 may prevent fluid communication between the first and second portions 92 and 94 of the longitudinal passage 72. More specifically, the head 74 may prevent fluid communication between the first and third portions 92 and 102, and the second portion 82 of the shank 76 may prevent fluid communication between the second and third portions 94 and 102.

The nozzle body 70 also defines a high pressure passage 114 and a low pressure passage 116. The high pressure passage 114 is configured to receive pressurized fuel from a fuel supply line (not shown) through an inlet 118 that extends through a perimeter surface 119 of the nozzle 60. The low pressure passage 116 is configured to return low pressure fuel to a fuel return line (not shown) through an outlet 120 that extends through the perimeter surface 119.

The high pressure passage 114 includes a first portion 122 and a second portion 124. The first portion 122 of the high pressure passage 114 extends from the inlet 118 to the annular gap between the shank 76 of the needle 62 and the longitudinal passage 72. The second portion 124 of the high pressure passage 114 extends radially inward from the first portion 122 of the high pressure passage 114 to the first portion 92 of the longitudinal passage 72.

The nozzle body 70 may also define an annular groove 126 configured to receive an annular seal 128 such as an O-ring. The annular seal 128 seals the interface between the outer perimeter surface of the nozzle body 70 and the inner perimeter surface of the engine block in which the fuel injector 22a is mounted.

In addition to the solenoid valve 73, the pressure control section 64 includes a pressure control body 130 that defines longitudinal passages 132 and 134. The longitudinal passage 132 extends along the second longitudinal axis A4 from the solenoid valve 73 to the longitudinal passage 134, and the longitudinal passage 134 extends along the second longitudinal axis A3 from the longitudinal passage 132 to the longitudinal passage 72 of the nozzle 60. Thus, the longitudinal passages 72, 132, and 134 are in fluid communication with one another. The longitudinal passage 134 may be considered part of the longitudinal passage 72, and the portion of the pressure control body 130 that surrounds the longitudinal passage 134 may be considered part of the nozzle body 70.

The longitudinal passages 132 and 134 and the first portion 92 of the longitudinal passage 72 cooperate to form an actuation passage. Pressurized fuel within the actuation passage acts on the head 74 of the needle 62 to urge the needle 62 toward the second end 68 of the nozzle 60. The solenoid valve 73 regulates the pressure of fuel within the actuation passage to actuate the needle 62 between its first and second positions.

The pressure control body 130 further defines a low pressure passage 136 and a valve receptacle 138. The low pressure passage 136 includes a first portion 140, a second portion 142, and a third portion 144. The first portion 140 of the low pressure passage 136 extends around the solenoid valve 73. The second portion 142 of the low pressure passage 136 extends from the first portion 140 to the third portion 144 of the low pressure passage 136. The third portion 144 of the low pressure passage 136 extends from the second portion 142 to the low pressure passage 116 of the nozzle 60.

The solenoid valve 73 is secured within the valve receptacle 138 of the pressure control body 130 and includes a terminal 146, a valve spring 148, a solenoid 150, a magnetic core 152, an armature plate 154, an armature rod 156, a valve ball 158, and a valve seat 160. The armature plate 154 is fixed to the armature rod 156 for movement therewith along the longitudinal axis A4. The valve spring 148 biases the armature rod 156 and the valve ball 158 toward the valve seat 160. When the valve ball 158 is seated against the valve seat 160, the solenoid valve 73 prevents fluid communication between the actuation passage and the low pressure passages 116 and 136.

In operation, the fuel injector 22a opens and closes based on a balance of forces urging the needle 62 toward the second end 68 of the nozzle 60 and a force urging the needle 62 toward the first end 66 of the nozzle 60. The forces urging the needle 62 toward the second end 68 of the nozzle 60 includes a pressure force exerted on the head 74 of the needle 62 by pressurized fluid in the actuation passage, as well as a spring force exerted on the shank 76 of the needle 62 by the spring 110. The force urging the needle 62 toward the first end 66 of the nozzle 60 is a pressure force exerted on the shank 76 of the needle 62 by pressurized fluid in the second portion 94 of the longitudinal passage 72.

To open the fuel injector 22a, a controller (not shown) supplies an electrical signal to the terminal 146 of the solenoid valve 73. In response, the solenoid 150 and the magnetic core 152 generate a magnetic field that causes the armature plate 154 and the armature rod 156 to move toward the terminal 146, which allows pressurized fluid in the actuation passage to unseat the valve ball 158 from the valve seat 160. In turn, the solenoid valve 73 opens, and the actuation passage is in fluid communication with the low pressure passages 116 and 136. As a result, the pressure in the actuation passage starts to decrease.

As the pressure in the actuation passage decreases, the sum of the forces urging the needle 62 toward the second end 68 of the nozzle 60 becomes less than the force urging the needle 62 toward the first end 66 of the nozzle 60. Thus, the needle 62 moves from its first position (FIG. 3) to its second position (FIG. 4). In turn, pressurized fuel in the second portion 94 of the longitudinal passage 72 is allowed to flow through the second end 68 of the nozzle 60.

In addition, when the needle 62 is in the second position, the head 74 of the needle 62 blocks the second portion 124 of the high pressure passage 114 to prevent fluid communication between the high pressure passage 114 and the actuation passage. This ensures that pressurized fuel in the high pressure passage 114 flows through the second end 68 of the nozzle 60 rather than flowing through the actuation passage and the low pressure passages 112, 136 to the outlet 120. Pressurized fuel may flow through the latter flow path for only a brief moment as the needle 62 moves between the first and second positions.

To close the fuel injector 22a, the controller stops supplying the electrical signal to the terminal 146 of the solenoid valve 73. In turn, the solenoid 150 and the magnetic core 152 stop generating the magnetic field causing the armature plate 154 and the armature rod 156 to move toward the terminal 146. As a result, the force of the spring 148 moves the armature plate 154, the armature rod 156, and the valve ball 158 toward the valve seat 160.

When the valve ball 158 is seated against the valve seat 160, fluctuations in the pressure of fuel supplied to the high pressure passage 114 temporarily reduce the force urging the needle 62 toward the first end 66 of the nozzle 60. In turn, the needle 62 moves toward the second end 68 such that the head 74 of the needle 62 is only partially blocking the second portion 124 of the high pressure passage 114. As a result, pressurized fuel enters the actuation passage, and the sum of the forces urging the needle 62 toward the second end 68 of the nozzle 60 becomes greater than the force urging the needle 62 toward the first end 66 of the nozzle 60. Thus, the needle 62 moves to its first positon.

In various implementations, the inlet 118 of the high pressure passage 114 and the second portion 124 of the high pressure passage 114 may be defined by the pressure control body 130 instead of the nozzle body 70. In addition, the head 74 of the needle 62 may not block the second portion 124 of the high pressure passage 114 when the needle 62 is in its second position. As a result, the fuel injector 22a may close when the solenoid valve 73 is closed regardless of pressure fluctuations in the fuel supplied to the fuel injector 22a.

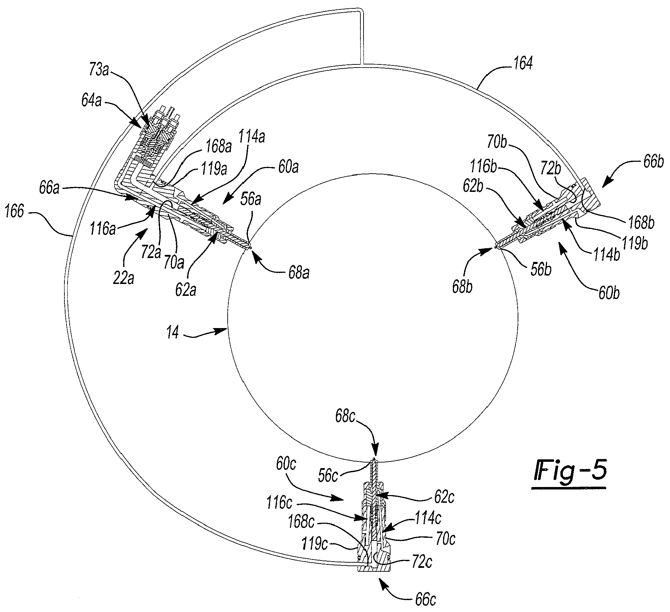

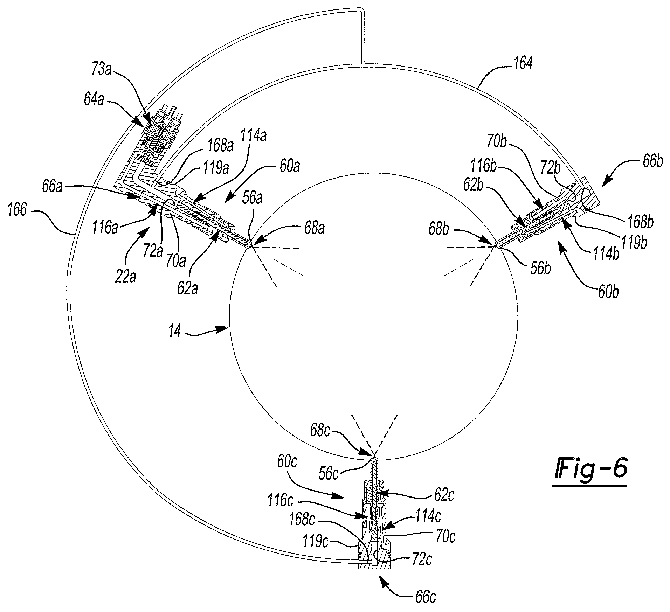

Referring now to FIGS. 5 and 6, an alternative embodiment of the engine 10 is shown in which a single pressure control section (pressure control section 64a) controls fuel flow through three nozzles (nozzles 60a, 60b, 60c). In FIGS. 5 and 6, the pressure control sections 64b, 64c of the fuel injectors 22b, 22c are omitted, and fuel lines 164, 166 have been added to place the longitudinal passages 72a, 72b, 72c of the nozzles 60a, 60b, 60c in fluid communication with each other. In addition, the nozzle bodies 70a, 70b, 70c define communication passages 168a, 168b, 168c that extend through the perimeter surfaces 119a, 119b, 119c of the nozzles 60a, 60b, 60c and to the longitudinal passages 72a, 72b, 72c. The fuel line 164 extends between the communication passages 168a and 168b to place the longitudinal passages 72a, 72b of the nozzles 60a, 60b in fluid communication with each other. The fuel line 166 extends from the fuel line 164 to the communication passage 168c to place the longitudinal passage 72c of the nozzle 60c in fluid communication with the longitudinal passages 72a, 72b of the nozzles 60a, 60b.

In operation, the fuel injector 22a of FIGS. 5 and 6 is opened and closed as described above with respect to FIGS. 3 and 4. However, in FIGS. 3 and 4, opening and closing the solenoid valve 73a only regulates the pressure within the longitudinal passages 72a of the nozzle 60a. In contrast, in FIGS. 5 and 6, opening and closing the solenoid valve 73a regulates the pressure within the longitudinal passages 72a, 72b, 72c of the nozzles 60a, 60b, 60c. Thus, the solenoid valve 73a can be operated to control fuel flow through all three of the nozzles 60a, 60b, 60c. In addition, eliminating the pressure control sections 64b, 64c of the fuel injectors 22b, 22c further reduces the packaging space required by the engine 10.

In FIG. 5, the solenoid valve 73a is closed, and the pressure of fuel in the longitudinal passages 72a, 72b, 72c is equal to the pressure of fuel in the high pressure passage 114a. Thus, the forces urging the needles 62a, 62b, 62c toward the second ends 68a, 68b, 68c of the nozzles 60a, 60b, 60c are respectively greater than the forces urging the needle needles 62a, 62b, 62c toward the first ends 66a, 66b, 66c of the nozzles 60a, 60b, 60c. In turn, the needles 62a, 62b, 62c are in their respective first positions, and the second ends 68a, 68b, 68c of the nozzles 60a, 60b, 60c are closed to prevent fuel flow therethrough.

In FIG. 6, the solenoid valve 73a is open, and the pressure of fuel in the longitudinal passages 72a, 72b, 72c is equal to the pressure of fuel in the low pressure passage 116a. Thus, the forces urging the needles 62a, 62b, 62c toward the second ends 68a, 68b, 68c of the nozzles 60a, 60b, 60c are respectively less than the forces urging the needle needles 62a, 62b, 62c toward the first ends 66a, 66b, 66c of the nozzles 60a, 60b, 60c. In turn, the needles 62a, 62b, 62c are in their respective second positions, and the second ends 68a, 68b, 68c of the nozzles 60a, 60b, 60c are open to allow fuel flow therethrough.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (e.g., rotated 90 degrees) and the spatially relative terms used herein interpreted accordingly.

It follows a list of further embodiments:
1. A fuel injector comprising:
   a nozzle having a first end and a second end and extending along a first longitudinal axis from the first end to the second end, the nozzle including a nozzle body defining a first longitudinal passage that extends along the first longitudinal axis and through the second end of the nozzle;
   a needle that is disposed within the first longitudinal passage of the nozzle and that is movable between a first position in which the needle prevents fuel from flowing through the second end of the nozzle and a second position in which the needle allows fuel to flow through the second end of the nozzle; and
   a pressure control section that extends along a second longitudinal axis that is angularly offset relative to the first longitudinal axis of the nozzle, the pressure control section including an electromechanical actuator that actuates the needle between the first and second positions.
2. The fuel injector of embodiment 1 wherein the second longitudinal axis is oriented at an angle between 45 degrees and 135 degrees relative to the first longitudinal axis of the nozzle.
3. The fuel injector of embodiment 2 wherein the angle is equal to approximately 90 degrees.
4. The fuel injector of embodiment 1 wherein the needle includes a head, a shank, and a tip, the tip being disposed adjacent to the second end of the nozzle, the head being disposed at an end of the needle opposite from the tip.
5. The fuel injector of embodiment 4 wherein the electromechanical actuator is a solenoid valve that regulates the flow of pressurized fluid acting on the head of the needle to actuate the needle between the first and second positions.
6. The fuel injector of embodiment 5 wherein the pressure control section includes a pressure control body defining a second longitudinal passage that extends along the second longitudinal axis of the pressure control body and that is in fluid communication with the first longitudinal passage of the nozzle.
7. The fuel injector of embodiment 6 wherein the nozzle body and the pressure control body are monolithically formed.
8. The fuel injector of embodiment 6 wherein the first longitudinal passage includes a first portion and a second portion, the head of the needle being disposed within the first portion, at least one of the tip and the shank of the needle being disposed within the second portion, at least one of the head and the shank preventing fluid communication between the first and second portions.
9. The fuel injector of embodiment 8 wherein the first portion of the first longitudinal passage has a first diameter and the second portion of the first longitudinal passage has a second diameter that is less than the first diameter.
10. The fuel injector of embodiment 9 wherein:
   the second longitudinal passage and the first portion of the first longitudinal passage cooperate to form an actuation passage; and
   the solenoid valve regulates fluid pressure within the actuation passage to actuate the needle between the first and second positions.
11. The fuel injector of embodiment 10 wherein:
   at least one of the nozzle body and the pressure control body defines a high pressure passage that is configured to receive pressurized fuel and that is in at least selective fluid communication with the actuation passage;
   the pressure control body defines a low pressure passage; and
   the solenoid valve is operable to control fluid communication between the low pressure passage and the actuation passage, and thereby regulate a first pressure force of fluid within the actuation passage acting on the head of the needle to urge the needle toward the second end of the nozzle.
12. The fuel injector of embodiment 11 wherein:
   the high pressure passage intersects the actuation passage at a location between the head of the needle and the first end of the nozzle such that the high pressure passage is in fluid communication with the actuation passage when the needle is first position; and
   the head of the needle blocks the high pressure passage to prevent fluid communication between the high pressure passage and the actuation passage when the needle is in the second position.
13. The fuel injector of embodiment 11 wherein:
   the solenoid valve prevents communication between the low pressure passage and the actuation passage when the solenoid valve is closed;
   the solenoid valve allows communication between the low pressure passage and the actuation passage when the solenoid valve is open; and
   the solenoid valve opens and closes in response to an electrical signal.
14. The fuel injector of embodiment 13 further comprising a biasing member that applies a biasing force to at least one of the head and shank of the needle to bias the needle toward the second end of the nozzle, wherein the needle moves between the first and second positions based on a balance between the biasing force and the first pressure force of the actuation passage.
15. The fuel injector of embodiment 14 wherein:
   the high pressure passage is in fluid communication with the second portion of the longitudinal passage;
   a second pressure force of fluid within the second portion of the first longitudinal passage acts on at least one of the head and the shank of the needle to urge the needle toward the first end of the nozzle; and
   the needle moves between the first and second positions based on a balance between the second pressure force and a sum of the first pressure force of the actuation passage and the biasing force of the biasing member.
16. An opposed-piston engine comprising:
   a cylinder defining a cylinder bore and first and second injection ports extending through a perimeter surface of the cylinder to the cylinder bore;
   a pair of pistons disposed within the cylinder bore and at least partially defining a combustion chamber therebetween; and
   first and second ones of the fuel injector of embodiment 1, wherein the first and second fuel injectors are operable to inject fuel through the first and second injection ports, respectively.
17. The opposed-piston engine of embodiment 16 wherein the first and the second longitudinal axes of the first and second fuel injectors are disposed within a common plane that is perpendicular to a longitudinal axis of the cylinder.
18. The opposed-piston engine of embodiment 16 further comprising a third one of the fuel injector of embodiment 1, wherein the cylinder defines a third injection port extending through the perimeter surface of the cylinder to the cylinder bore, and the third fuel injector is operable to inject fuel through the third injection port.
19. The opposed-piston engine of embodiment 18 wherein the first and the second longitudinal axes of the first, second, and third fuel injectors are disposed within a common plane that is perpendicular to a longitudinal axis of the cylinder.
20. The opposed-piston engine of embodiment 18 wherein the first longitudinal axes of the first, second, and third fuel injectors are symmetrically disposed about the longitudinal axis of the cylinder.
21. An opposed-piston engine comprising:
   a cylinder defining a cylinder bore and at least one injection port extending through a perimeter surface of the cylinder to the cylinder bore;
   a pair of pistons disposed within the cylinder bore and at least partially defining a combustion chamber therebetween; and
   a first fuel injector operable to inject fuel into the cylinder bore through the at least one injection port, the first fuel injector including:
      a first nozzle having a first end and a second end and extending along a first longitudinal axis from the first end to the second end, the first nozzle defining a first longitudinal passage that extends along the first longitudinal axis and through the second end;
      a first needle disposed within the first longitudinal passage and movable between a first position in which the first needle prevents fuel flow through the second end of the first nozzle and a second position in which the first needle allows fuel flow through the second end of the first nozzle; and
      a pressure control section extending along a second longitudinal axis that is angularly offset relative to the first longitudinal axis, the pressure control section including an electromechanical actuator that actuates the needle between the first and second positions.
22. The opposed-piston engine of embodiment 21 wherein the first and second longitudinal axes are disposed within a common plane that is perpendicular to a longitudinal axis of the cylinder.
23. The opposed-piston engine of embodiment 21 wherein:
   the at least one injection port includes a first injection port and a second injection port;
   the first fuel injector is operable to inject fuel into the cylinder bore through the first injection port; and
   the opposed-piston engine further comprises:
      a second nozzle configured to inject fuel into the cylinder bore through the second injection port, the second nozzle having a first end and a second end and defining a second longitudinal passage that extends through the second end of the second nozzle; and
      a second needle disposed within the second longitudinal passage of the second nozzle and movable between a first position in which the second needle prevents fuel flow through the second end of the second nozzle and a second position in which the second needle allows fuel flow through the second end of the second nozzle.
24. The opposed-piston engine of embodiment 23 wherein the first and second injection ports are aligned with one another along a longitudinal axis of the cylinder.
25. The opposed-piston engine of embodiment 24 wherein:
   the cylinder further defines a plurality of intake ports and a plurality of exhaust ports, the plurality of intake ports extending through the perimeter surface of the cylinder at a first location along the longitudinal axis of the cylinder, the plurality of exhaust ports extending through the perimeter surface of the cylinder at a second location along the longitudinal axis of the cylinder; and
   the first and second injection ports are disposed at a third location along the longitudinal axis of the cylinder that is approximately midway between the first and second locations.
26. The opposed-piston engine of embodiment 23 wherein each of the first and second needles includes a head, a shank, and a tip, the tips being disposed adjacent to the second ends of the first and second nozzles, the heads being disposed at ends of the first and second needles opposite from the tips.
27. The opposed-piston engine of embodiment 26 wherein the electromechanical actuator is a solenoid valve that regulates the flow of pressurized fluid acting on the heads of the first and second needles to actuate the first and second needles between their respective first and second positions.
28. The opposed-piston engine of embodiment 27 wherein the solenoid valve regulates a pressure of fluid within the first and second longitudinal passages acting on the heads of the first and second needles, respectively, to urge the first and second needles toward the second ends of the first and second nozzles, respectively.
29. The opposed-piston engine of embodiment 27 wherein:
   the first nozzle defines a first communication passage extending through a perimeter surface of the first nozzle and to the first longitudinal passage of the first nozzle;
   the second nozzle defines a second communication passage extending through a perimeter surface of the second nozzle and to the second longitudinal passage of the second nozzle; and
   the opposed-piston engine further comprises a fuel line that extends between the first and second communication passages to place the first and second longitudinal passages in fluid communication with one another.
30. The opposed-piston engine of embodiment 29 wherein:
   the at least one injection port includes a third injection port; and
   the opposed-piston engine further comprises:
      a third nozzle configured to inject fuel into the cylinder bore through the third injection port, the third nozzle having a first end and a second end and defining a third longitudinal passage that extends through the second end of the third nozzle; and
      a third needle disposed within the third longitudinal passage of the third nozzle and movable between a first position in which the third needle prevents fuel flow through the second end of the third nozzle and a second position in which the third needle allows fuel flow through the second end of the third nozzle.
31. The opposed-piston engine of embodiment 30 wherein the first, second, and third injection ports are aligned with one another along a longitudinal axis of the cylinder.
32. The opposed-piston engine of embodiment 31 wherein the first, second, and third injection ports are symmetrically disposed about the longitudinal axis of the cylinder.
33. The opposed-piston engine of embodiment 30 wherein the third needle includes a head, a shank, and a tip, the tip being disposed adjacent to the second end of the third nozzle, the head being disposed at an end of the third needle opposite from the tip.
34. The opposed-piston engine of embodiment 33 wherein the solenoid valve regulates the flow of pressurized fluid acting on the heads of the first, second, and third needles to actuate the first, second, and third needles between their respective first and second positions.
35. The opposed-piston engine of embodiment 30 wherein:
   the third nozzle defines a third communication passage extending through a perimeter surface of the third nozzle and to the third longitudinal passage of the third nozzle; and
   the fuel line extends between the first, second, and third communication passages to place the first, second, and third longitudinal passages in fluid communication with one another.

## Claims

1. A fuel injector (22, 22a, 22b, 22c) comprising:
a nozzle (60, 60a, 60b, 60c) having a first end (66, 66a, 66b, 66c) and a second end (68, 68a, 68b, 68c) and extending along a first longitudinal axis (A3) from the first end to the second end, the nozzle including a nozzle body (70, 70a, 70b, 70c) defining a first longitudinal passage (72, 72a, 72b, 72c) that extends along the first longitudinal axis and through the second end of the nozzle;
a needle (62, 62a, 62b, 62c) that is disposed within the first longitudinal passage of the nozzle and that is movable between a first position in which the needle prevents fuel from flowing through the second end of the nozzle and a second position in which the needle allows fuel to flow through the second end of the nozzle; and
a pressure control section (64, 64a) that extends along a second longitudinal axis (A4) that is angularly offset relative to the first longitudinal axis of the nozzle, the pressure control section including an electromechanical actuator (73, 73a) that actuates the needle between the first and second positions.

2. The fuel injector of claim 1, wherein the second longitudinal axis is oriented at an angle (θ) between 45 degrees and 135 degrees relative to the first longitudinal axis of the nozzle.

3. The fuel injector of claims 1 or 2, wherein the needle includes a head (74), a shank (76), and a tip (78), the tip being disposed adjacent to the second end of the nozzle, the head being disposed at an end of the needle opposite from the tip.

4. The fuel injector of claim 3, wherein the electromechanical actuator is a solenoid valve (73) that regulates the flow of pressurized fluid acting on the head of the needle to actuate the needle between the first and second positions.

5. The fuel injector of any of claims 1 to 4 wherein the pressure control section includes a pressure control body (130) defining a second longitudinal passage (132) that extends along the second longitudinal axis of the pressure control body and that is in fluid communication with the first longitudinal passage of the nozzle.

6. The fuel injector of any of claims 3 to 5 wherein the first longitudinal passage includes a first portion (92) and a second portion (94), the head of the needle being disposed within the first portion, at least one of the tip and the shank of the needle being disposed within the second portion, at least one of the head and the shank preventing fluid communication between the first and second portions.

7. The fuel injector of claim 6 wherein the first portion of the first longitudinal passage has a first diameter and the second portion of the first longitudinal passage has a second diameter that is less than the first diameter.

8. The fuel injector according to claims 4, 5, 6 and 7 wherein:
the second longitudinal passage and the first portion of the first longitudinal passage cooperate to form an actuation passage; and
the solenoid valve regulates fluid pressure within the actuation passage to actuate the needle between the first and second positions.

9. The fuel injector of claim 8 wherein:
at least one of the nozzle body and the pressure control body defines a high pressure passage (114, 114a, 114b, 114c) that is configured to receive pressurized fuel and that is in at least selective fluid communication with the actuation passage;
the pressure control body defines a low pressure passage (116, 116a, 116b, 116c); and
the solenoid valve is operable to control fluid communication between the low pressure passage and the actuation passage, and thereby regulate a first pressure force of fluid within the actuation passage acting on the head of the needle to urge the needle toward the second end of the nozzle.

10. The fuel injector of claim 9 wherein:
the high pressure passage intersects the actuation passage at a location between the head of the needle and the first end of the nozzle such that the high pressure passage is in fluid communication with the actuation passage when the needle is first position; and
the head of the needle blocks the high pressure passage to prevent fluid communication between the high pressure passage and the actuation passage when the needle is in the second position.

11. The fuel injector of claims 9 or 10 wherein:
the solenoid valve prevents communication between the low pressure passage and the actuation passage when the solenoid valve is closed;
the solenoid valve allows communication between the low pressure passage and the actuation passage when the solenoid valve is open; and
the solenoid valve opens and closes in response to an electrical signal.

12. The fuel injector of claim 11 further comprising a biasing member (110) that applies a biasing force to at least one of the head and shank of the needle to bias the needle toward the second end of the nozzle, wherein the needle moves between the first and second positions based on a balance between the biasing force and the first pressure force of the actuation passage.

13. The fuel injector of claim 12 wherein:
the high pressure passage is in fluid communication with the second portion of the longitudinal passage;
a second pressure force of fluid within the second portion of the first longitudinal passage acts on at least one of the head and the shank of the needle to urge the needle toward the first end of the nozzle; and
the needle moves between the first and second positions based on a balance between the second pressure force and a sum of the first pressure force of the actuation passage and the biasing force of the biasing member.

14. An opposed-piston engine (10) comprising:
a cylinder (14) defining a cylinder bore (26) and first and second injection ports (56a, 56b) extending through a perimeter surface (54) of the cylinder to the cylinder bore;
a pair of pistons (16) disposed within the cylinder bore and at least partially defining a combustion chamber therebetween; and
first and second ones of the fuel injector of any one of the preceding claims, wherein the first and second fuel injectors are operable to inject fuel through the first and second injection ports, respectively.

15. The opposed-piston engine of claim 14 wherein the first and the second longitudinal axes of the first and second fuel injectors are disposed within a common plane that is perpendicular to a longitudinal axis (A1) of the cylinder.
